# EUROPÄISCHE PATENTSCHRIFT

(11) **EP 1 345 098 B1**
(45) Veröffentlichungstag und Bekanntmachung des Hinweises auf die Patenterteilung: **24.10.2007**
(21) Anmeldenummer: 02027053.4
(22) Anmeldetag: 03.12.2002
(51) Int. Cl.: G05B 19/042, H02P 9/30

(54) **Regler mit digitalem Speicher**
Regulator with digital memory
Régulateur avec mémoire numérique

(30) Priorität: 12.03.2002 DE 10210724
(43) Veröffentlichungstag der Anmeldung: 17.09.2003
(73) Patentinhaber: ROBERT BOSCH GMBH, 70442 Stuttgart (DE)
(72) Erfinder: Koss, Thomas, 72766 Reutlingen (DE); Nasswetter, Guenter, 72810 Gomaringen (DE); Suelzle, Helmut, 71691 Freiberg (DE)

(56) Entgegenhaltungen:
- EP-A- 0 391 316
- US-A- 5 043 911
- US-A- 5 916 296

## Beschreibung

Die Erfindung betrifft einen Regler mit digitalem Speicher sowie ein zugehöriges Regelverfahren mit den Merkmalen der unabhängigen Patentansprüche und betrifft insbesondere einen Regler, der einen in einem Kraftfahrzeug befindlichen Generator regelt und über einen elektronischen Speicher verfügt, in welchem Software zur Regelung speicherbar ist.

### Stand der Technik

Es ist bekannt, zur Steuerung bzw. Regelung verschiedener Einrichtungen Mikroprozessoren einzusetzen, die über geeignete Speichermittel verfügen bzw. auf diese zugreifen können. In den Speichermitteln sind die für die Regelung benötigten Größen oder Programme abgelegt. Im üblichen Betrieb greift der Mikroprozessor auf die Speicher mit den benötigten Größen bzw. auf die benötigten Programme zu und führt die Regelung in Abhängigkeit von den abgespeicherten Größen durch.

Solche Regelungen laufen beispielsweise im digitalen Steuergerät eines Kraftfahrzeugs ab und betreffen insbesondere die Regelung der Zündung und/oder der Einspritzung beim Motor des Fahrzeugs. Die zugehörigen Steuergeräte umfassen einen Mikrorechner sowie mit diesem fest verbundenen Speicher, die die benötigten Steuerdaten und die Programme enthalten.

Bei einem solchen digitalen Steuergerät zur Motorsteuerung werden Maßnahmen vorgesehen, die nach Einbau des Steuergeräts ins Fahrzeug nachträgliche Programm- und Datenänderungen durchführen lassen, ohne daß ein externes Programmiergerät erforderlich ist. Es wird dazu lediglich ein externer Datenträger angeschlossen, dessen Daten übertragen werden können. Während der Übertragung der Daten wird die Steuerung bzw. Regelung mit Hilfe eines eingebauten Hilfsspeichers durchgeführt. Nachträgliche Software-Verbesserungen, die sowohl die Funktion als auch die Daten betreffen, können dabei in einer Werkstatt oder durch Datenfernübertragung, beispielsweise über ein Telefon-Modem erfolgen. Es ist damit auch möglich, einem Fahrzeugtyp verschiedene Software-Versionen zuzuordnen, die auch nachträglich wieder rückgängig gemacht werden können. Ein solches digitales Steuergerät wird beispielsweise in der DE-OS 40 03 507 beschrieben.

Bei der Regelung von Generatoren in Kraftfahrzeugen werden Spannungsregler eingesetzt, die üblicherweise in der Nähe des Generators, beispielsweise eines Drehstromgenerators, angeordnet sind und den Erregerstrom des Generators so regeln, daß die Ausgangsspannung des Generators im wesentlichen konstant bleibt oder vorgebbaren Kriterien folgt. Da für verschiedene Generatoren auch verschiedene Varianten von Reglern benötigt werden, werden üblicherweise die benötigten Varianten und Änderungen bei Reglern für Generatoren in Hardware realisiert. Software-Lösungen, die elektronische Speicher im Regler benötigen, sind derzeit nicht realisierbar, da solche elektronischen Speicher bei hohen Temperaturen die Daten verlieren.

Da unter gewissen Betriebsbedingungen bei Generatoren bzw. den zugehörigen Spannungsreglern, die üblicherweise in der Nähe der Generatoren angeordnet sind, Temperaturen von 150°C und kurzzeitig auch mehr auftreten können, besteht somit die Gefahr, daß eine funktionsfähige Regelung nicht generell gewährleistet ist, da die benötigten Informationen bei diesen hohen Temperaturen in den Speichern nicht mehr sicher vorhanden sind.

Aus der DE-OS 199 490 31 ist eine Vorrichtung zur Regelung eines Generators bekannt, bei der der Spannungsregler, der die Ausgangsspannung des Generators regelt, dem Generator zugeordnet ist und über eine Schnittstelle und eine Verbindungsleitung mit einem Steuergerät verbunden ist. Im Steuergerät sind Daten gespeichert, auf die bei der Regelung zurückgegriffen wird. Eine Speicherung dieser Daten im Regler ist aber nicht vorgesehen.

Aus der US-PS 5,043,911 ist ein Spannungsregler für einen Generator bzw. ein zugehöriges Regelverfahren bekannt, bei dem die mittels einer geeigneten Sensorik ermittelten Ausgangsgrößen des Generators mit Hilfe eines A/D-Wandlers in digitale Informationen gewandelt werden. Diese digitalen Informationen werden in einem ersten Speicher zwischengespeichert und dann einem Speicher des Spannungsreglers zur Verfügung gestellt, wobei ein bidirektionaler Datenaustausch erfolgen kann. Der Spannungsregler regelt die Ausgangsspannung des Generators abhängig von den zugeführten und gegebenenfalls zwischengespeicherten Informationen. Aus der genannten Druckschrift ist weiterhin bekannt, dass auch eine Generatorregelung unter Einsatz eines analogen Schaltkreises möglich ist, eine Kombination von analoger und digitaler Regelung abhängig von vorgebbaren Bedingungen wird jedoch nicht erwähnt.

Die US-PS 5,916,291 beschreibt ein digitales Motorsteuergerät, bei dem Informationen von einer Vielzahl von Sensoren zur Motorsteuerung ausgewertet werden. Die Sensorsignale werden soweit sie analog vorliegen in Digitalwerte gewandelt und zumindest teilweise in Speichern zwischengespeichert bevor sie vom Mikroprozessor des Steuergeräts verarbeitet werden. Da digitale Speicher bei hohen Temperaturen verlieren können, sind Maßnahmen vorgesehen, die einen Weiterbetrieb auch für diesen Fehlerfall ermöglichen. Dazu werden die Daten redundant vorgehalten bzw. es ist ein doppeltes Rechnersystem vorhanden.

### Vorteile der Erfindung

Der erfindungsgemäße Regler mit digitalem Speicher sowie das zugehörige Regelverfahren mit den Merkmalen der unabhängigen Patentansprüche hat demgegenüber den Vorteil, daß eine zuverlässige Funktion des Reglers sichergestellt wird, auch wenn die Randbedingungen, die die Funktion des Reglers beeinträchtigen, Größenordnungen annehmen, die eine Funktion gefährden könnten. Erzielt wird dieser Vorteil, indem Mittel vorhanden sind, die eine Notregelung durchführen, sofern die Randbedingungen nicht mehr erfüllt sind und die Möglichkeit besteht, dass die im Speicher abgelegten Daten nicht zuverlässig sind.

Weitere Vorteile der Erfindung werden durch die in den Unteransprüchen angegebenen Maßnahmen erzielt. In besonders vorteilhafter Weise wird die Erfindung in Verbindung mit einem Spannungsregler für einen Generator eingesetzt, wobei der Spannungsregler wenigstens einen elektronischen Speicher umfaßt, in welchem Software-Lösungen bezüglich Regelfunktionen für den Generator abgelegt sind. Dieser elektronische Speicher steht in Verbindung mit einem Steuergerät, das einen weiteren Speicher umfaßt, in welchem die Daten des Speichers des Spannungsreglers ebenfalls vorhanden sind.

Unter vorgebbaren Bedingungen, beispielsweise bei hohen Temperaturen, wenn zu befürchten ist, daß die im elektronischen Speicher des Spannungsreglers gespeicherten Daten verloren gegangen sind oder zumindest unsicher ist, ob der Speicherinhalt korrekt ist, wird der Speicher verriegelt und eine Notregelung durchgeführt. Es kann auch vorgesehen werden, den Speicher zu verriegeln und eine Notregelung durchzuführen, wenn durch eine geeignete interne Überprüfung des Speichers, beispielsweise durch einen Parity-, Checksumusw. Check ein Fehler festgestellt wird. In vorteilhafter Weise wird die Temperatur des Reglers gemessen und bei erkanntem Unterschreiten einer Grenztemperatur wird der Speicher des Spannungsreglers vom Steuergerät neu geladen und im weiteren Verlauf wird die erweiterte Spannungsregelung durchgeführt.

### Zeichnung

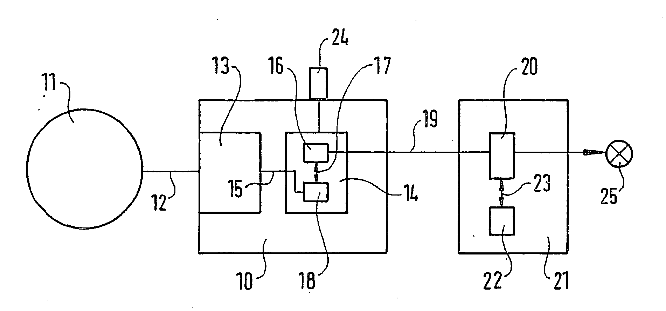

Ein Ausführungsbeispiel der Erfindung ist in der Zeichnung dargestellt und wird in der nachfolgenden Beschreibung näher erläutert. Im einzelnen zeigt die einzige Figur eine erfindungsgemäße Ausgestaltung am Beispiel eines Spannungsreglers für einen Generator, beispielsweise einen Drehstromgenerator in einem Kraftfahrzeug.

### Beschreibung

Für verschiedene Regler oder ähnliche elektronische Bauelemente sind Anpassungen an verschiedene Gegebenheiten erforderlich. Beispielsweise sind Varianten und Änderungen der Regler für verschiedene Generatoren erforderlich, wodurch spezielle Eigenschaften der Generatoren oder der zugehörigen Fahrzeuge berücksichtigt werden können. Solche Varianten werden erfindungsgemäß mit Hilfe geeigneter Software-Lösungen realisiert, wobei diese Software-Lösungen in geeignete Speichermittel im Regler eingeschrieben werden.

Da solche elektronischen Speicher bei zu hohen Temperaturen ihre Daten verlieren, jedoch üblicherweise bei Spannungsregler-Generator-Systemen solche Temperaturüberschreitungen nur zeitweise vorkommen, wird gemäß dem Ausführungsbeispiel der Erfindung eine Möglichkeit dargestellt, wie eine Spannungsregelung bei einem Generator erfolgen kann, bei der bei üblichen Temperaturen eine erweiterte Regelung durchgeführt wird, während bei zu hohen Temperaturen eine Notregelung durchgeführt wird und nach Unterschreiten eines Temperaturgrenzwertes wieder auf die normale Regelung übergegangen wird.

Eine Vorrichtung, mit der eine derartige Regelstrategie durchführbar ist, ist in der Figur schematisch dargestellt. Im Ausführungsbeispiel ist der Regler 10 mit dem Generator 11 über die schematisch dargestellten Verbindungen 12 elektrisch gekoppelt. Der Regler 10 regelt die Ausgangsspannung des Generators in üblicher Weise, indem er den Erregerstrom des Generators so beeinflußt, daß die Ausgangsspannung des Generators im wesentlichen konstant ist oder einen vorgebbaren Verlauf aufweist. Der Regler 10 ist üblicherweise dem Generator räumlich sehr nahe zugeordnet bzw. auf einem Generatorbauteil montiert, so daß eine Wärmekopplung zwischen Generator 11 und Regler 10 möglich ist.

Der Regler 10 umfaßt wenigstens ein Leistungsteil 13, welches den Erregerstrom in üblicher Weise beeinflußt und wenigstens einen Schalttransistor umfaßt. Gesteuert wird das Leistungsteil 13 bzw. der Schalttransistor des Leistungsteils 13 oder auch eine geregelte Gleichrichterbrücke mit Hilfe des Steuerteils 14, das entsprechende Ansteuersignale über eine Verbindung 15 an das Leistungsteil 13 des Spannungsreglers abgibt.

Das Steuerteil 14 des Spannungsreglers 10 umfaßt wenigstens einen elektronischen Speicher, in welchem Daten oder Software-Lösungen abspeicherbar sind. Diese Daten werden vom Steuerteil 14 des Reglers, das üblicherweise neben dem elektronischen Speicher 16 auch noch einen Prozessor 18 umfaßt, der die Daten aus dem elektronischen Speicher 16 übernimmt und anhand dieser Daten bzw. anhand dieser Software die Regelung durchführt und über die Verbindung 15 entsprechende Ansteuersignale an das Leistungsteil 13 abgibt.

Der Speicher 16 ist über eine Verbindung 19 mit dem Speicher 20 eines Steuergerätes 21 verbunden. Das Steuergerät 21 umfaßt zusätzlich wenigstens einen Prozessor 22, der über eine Verbindung 23 mit dem Speicher 20 in Verbindung steht. Im Speicher 20 des Steuergerätes 21 sind die selben Informationen gespeichert wie im Speicher 16 des Spannungsreglers. Zwischen dem Speicher 20 des Steuergerätes 21 und dem Speicher 16 des Spannungsreglers 10 können Informationen über die digitale Verbindung 19 bzw. über eine entsprechende Schnittstelle erfolgen. Damit können Datensätze sowie Softwaremodule vom Steuergerät 21 über die digitale Schnittstelle bzw. die Verbindung 19 in den Regler übertragen werden. Das Steuergerät 21 ist so weit vom Spannungsregler 10 entfernt, daß keine direkte thermische Kopplung vorhanden ist.

Die Temperatur des Spannungsreglers 10 wird mit Hilfe eines Temperatursensors 24 gemessen. Der Temperatursensor 24 kann dabei Bestandteil des Reglers 10 sein und ist beispielsweise mit dem Steuerteil des Reglers verbunden. Abhängig von der Höhe der Temperatur, die mit Hilfe des Temperatursensors ermittelt wird, verriegelt der Regler den Speicher 16 oder gibt dessen Inhalt frei.

Mit dem in der Figur dargestellten Spannungsregler-Generator-System läßt sich das erfindungsgemäße Verfahren durchführen. Voraussetzung dafür ist, daß der- Regler 10 bzw. das Steuerteil 14 des Reglers 10 eine Minimalfunktion zur Spannungsregelung in herkömmlicher Technik umfaßt. Der Datensatz bzw. die Softwaremodule, die eine erweiterte Regelung des Generators ermöglichen, werden beim Start vom Steuergerät über die digitale Schnittstelle 19 in den Regler 10 bzw. in den Speicher 16 des Reglers 10 übertragen. Der Regler überwacht während des gesamten Betriebes seine Temperatur, die mit Hilfe des Temperatursensors 24 ermittelt wird. Weiterhin gibt der Regler die im Speicher 16 abgelegte Software nur innerhalb eines zulässigen Temperaturbereiches frei. Dieser Temperaturbereich wird so gewählt, daß mit Sicherheit keine temperaturbedingten Fehlfunktionen im Speicher 16 auftreten bzw. aufgetreten sind.

Erreicht die Temperatur des Reglers bzw. des Speichers 16 des Reglers 10 eine vorgebbare Grenztemperatur, wird die Software verriegelt. D.h. oberhalb einer Grenztemperatur steht die Software des Speichers 16 für die Regelung nicht zur Verfügung. Der Regler bzw. das Steuerteil des Reglers schaltet auf einen internen Minimalmodus und regelt den Generator, ohne auf die Software des Speichers 16 zurückzugreifen. Diese Regelung kann einem Notlauf entsprechen.

Der Zustand "Übertemperatur" wird über die Schnittstelle 19 auch dem Steuergerät 21 mitgeteilt. Nach Unterschreiten der Grenztemperatur wird dem Steuergerät 21 vom Spannungsregler 10 mitgeteilt, daß wieder Normaltemperatur herrscht. Das Steuergerät überträgt dann den vorgesehenen Datensatz bzw. die Softwaremodule erneut in den Speicher 16 des Spannungsreglers 10, und der Spannungsregler 10 arbeitet wieder mit der erweiterten Regelfunktion. Es ist dann die volle Funktionsfähigkeit und optimale Regelung wieder sichergestellt.

Zusätzlich kann vorgesehen werden, daß das Steuergerät über eine Anzeige 25 anzeigt, ob die erweiterte Spannungsregelung durchgeführt wird oder das Arbeiten bzw. die Regelung in einem internen Minimalmodus erfolgt. wird. Die im Speicher 16 abgelegte Software kann Generatortyp, Reglertyp, Fahrzeugtyp oder bestimmte Präferenzen bei der Regelstrategie enthalten. Als Grenztemperatur wird eine Temperatur abgespeichert, bei der der eingesetzte elektronische Speicher, insbesondere ein Halbleiterspeicher oder EPROM oder ähnliches, mit Sicherheit noch voll funktionsfähig ist. Anstelle einer Grenztemperatur kann auch eine andere Grenze gewählt werden, bei deren erreichen ein Verlust der abgespeicherten Daten zu befürchten ist. Auch wenn eine geeignete Überprüfung des Speichers ein Erreichen einer Fehlerschwelle erkennen läßt, kann eine Verriegelung erfolgen.

Generell sind bei den erfindungsgemäßen Verfahren zum Betreiben eines Reglers mit digitalem Speicher dem digitalen Speicher im Betrieb, insbesonders nach dem Einschalten Daten und/oder Programme oder Softwaremodule zuführbar.

## Patentansprüche

1. Spannungsregler (10) für einen Generator (11), mit digitalem Speicher (16) und einem Steuereinrichtung (14), der mit einem Steuergerät (21) mit wenigstens einem Mikroprozessor (22) und einem weiteren Speicher (20) in Verbindung steht, wobei im Speicher (16) des Spannungsreglers (10) und im Speicher (20) des Steuergerätes (21) die identischen Informationen abgelegt werden und die Informationen des Steuergerätes (21) unter vorgebbaren Bedingungen an den Speicher (16) des Reglers (10) übertragbar sind, **dadurch gekennzeichnet, dass** der Spannungsregler (10) Mittel zur Regelung des Generators (11) aufweist, die eine Regelung ohne Information aus dem digitalen Speicher (16) ermöglichen, wobei diese Informationen wenigstens Regelfunktionen für den Generator beinhalten und dass Mittel (24) zur Temperaturerfassung vorhanden sind, die die Temperatur des Spannungsreglers (10) oder die Temperatur des Steuerteils (14) des Reglers (10) oder die Temperatur des Speichers (16) ermitteln, und dass Mittel vorhanden sind, die bei Erreichen einer vorgebbaren Temperatur den digitalen Speicher verriegeln.

2. Spannurigsregler (10) mit digitalem Speicher (16) nach Anspruch 1, **dadurch gekennzeichnet, dass** die Regelfunktionen Software-Lösungen sind.

3. Spannungsregler (10) mit digitalem Speicher (16) nach einem der vorhergehenden Ansprüche, **dadurch gekennzeichnet, dass** die abgespeicherten Informationen Datensätze oder Softwaremodule oder Regelstrategien oder Bauteilinformationen umfassen.

4. Verfahren zum Betreiben eines Spannungsreglers (10) mit digitalem Speicher (16) nach einem der vorhergehenden Ansprüche, **dadurch gekennzeichnet, dass** dem digitalen Speicher (16) beim Einschalten wenigstens ein Datensatz oder wenigstens ein Softwaremodul zugeführt wird und im Speicher (16) abgelegt wird und der Inhalt des Speichers (16) nur dann freigegeben wird, wenn eine vorgebbare Bedingung, insbesonders eine Temperatur unterhalb eines Grenzwertes liegt.

5. Verfahren zum Betreiben eines Spannungsreglers (10) mit digitalem Speicher (16) nach Anspruch 4, **dadurch gekennzeichnet, dass** nach Überschreiten der Grenztemperatur eine Mitteilung an das Steuergerät (21) abgegeben wird und nach Unterschreiten der Grenztemperatur der Inhalt eines Speichers (20) des Steuergerätes (21) an den Spannungsregler (10) übermittelt wird und im Speicher (16) des Spannungsreglers (10) abgelegt wird.

6. Verfahren zum Betreiben eines Spannungsreglers mit digitalem Speicher (16) nach Anspruch 4 oder 5, **dadurch gekennzeichnet, dass** der Regler (10) bei verriegeltem Speicher eine Notregelung des Generators (11) durchführt und bei freigegebenem Speicher (16) auf den Speicherinhalt zurückgreift und eine erweiterte Regelung des Generators (11) durchführt.

7. Verfahren zum Betreiben eines Spannungsreglers (10) mit digitalem Speicher nach einem der vorhergehenden Ansprüche, **dadurch gekennzeichnet, dass** dem digitalen Speicher (16) während des Betriebs Daten und/oder Programme zuführbar sind.

## Claims

1. Voltage regulator (10) for a generator (11), having a digital memory (16) and a control device (14) which is connected to a controller (21) having at least one microprocessor (22) and a further memory (20) with identical information being stored in the memory (16) for the voltage regulator (10) and in the memory (20) for the controller (21), and in which case the information in the controller (21) can be transferred subject to predeterminable conditions to the memory (16) from the regulator (10), **characterized in that** the voltage regulator (10) has means for regulation of the generator (11), which allow regulation without information from the digital memory (16), with this information including at least control functions for the generator, and **in that** means (24) are provided for temperature detection, which determine the temperature of the voltage regulator (10) or the temperature of the control part (14) of the regulator (10), or the temperature of the memory (16), and **in that** means are provided which lock the digital memory on reaching a predeterminable temperature.

2. Voltage regulator (10) having a digital memory (16) according to Claim 1, **characterized in that** the control functions are software solutions.

3. Voltage regulator (10) having a digital memory (16) according to one of the preceding claims, **characterized in that** the stored information comprises data records, software modules, control strategies or component information.

4. Method for operation of a voltage regulator (10) having a digital memory (16) according to one of the preceding claims, **characterized in that** the digital memory (16) is supplied on being switched on with at least one data record or at least one software module, which is stored in the memory (16), and the contents of the memory (16) are released only when a predeterminable condition, in particular a temperature, is below a limit value.

5. Method for operation of a voltage regulator (10) having a digital memory (16) according to Claim 4, **characterized in that** a message is emitted to the controller (21) if the limit temperature is overshot, and the contents of a memory (20) for the controller (21) are transmitted to the voltage regulator (10) and are stored in the memory (16) for the voltage regulator (10), if the limit temperature is undershot.

6. Method for operation of a voltage regulator having a digital memory (16) according to Claim 4 or 5, **characterized in that**, when the memory is locked, the regulator (10) provides emergency regulation for the generator (11) and, when the memory (16) is released, accesses the memory contents and provides extended regulation for the generator (11).

7. Method for operation of a voltage regulator (10) having a digital memory according to one of the preceding claims, **characterized in that** the digital memory (16) can be supplied with data and/or programs during operation.

## Revendications

1. Régulateur de tension (10) pour un générateur (11) comprenant une mémoire numérique (16) et une installation de commande (14), en relation avec un appareil de commande (21) ayant au moins un microprocesseur (22) et une autre mémoire (20),
la mémoire (16) du régulateur de tension (10) et la mémoire (20) de l'appareil de commande (21) contenant des informations identiques et les informations de l'appareil de commande (21) sont transmises dans les conditions prédéfinies à la mémoire (16) du régulateur (10),
**caractérisé en ce que**
le régulateur de tension (10) comporte des moyens de régulation du générateur (11) permettant une régulation sans informations de la mémoire numérique (16), ces informations comprenant au moins les fonctions de régulation du générateur, et
des moyens (24) sont prévus pour saisir la température du régulateur de tension (10) ou de l'appareil de commande (14) du régulateur (10) ou la température de la mémoire (16), et
des moyens sont prévus qui verrouillent la mémoire numérique lorsqu'on atteint une température prédéfinie.

2. Régulateur de tension (10) à mémoire numérique (16) selon la revendication 1,
**caractérisé en ce que**
les fonctions de régulation sont des solutions par programme.

3. Régulateur de tension (10) à mémoire numérique (16) selon l'une quelconque des revendications précédentes,
**caractérisé en ce que**
les informations enregistrées en mémoire sont des jeux de données ou des modules de programme ou des stratégies de régulation ou des informations de composants

4. Procédé de commande d'un régulateur de tension (10) comprenant une mémoire numérique (16) selon l'une quelconque des revendications précédentes,
**caractérisé en ce que**
lors du branchement, la mémoire numérique (16) reçoit au moins un jeu de données ou au moins un module de programme pour y être enregistrée et le contenu de la mémoire (16) est seulement libéré si une condition est prédéfinie, notamment une température inférieure à une valeur limite.

5. Procédé de commande d'un régulateur de tension (10) à mémoire numérique (16) selon la revendication 4,
**caractérisé en ce qu'**
en cas de dépassement de la température limite, une communication est transmise à l'appareil de commande (21) et après dépassement vers le bas de la température limite, le contenu d'une mémoire (20) de l'appareil de commande (21) est transmis au régulateur de tension (10) pour être enregistré dans sa mémoire (16).

6. Procédé de commande d'un régulateur de tension à mémoire numérique (16) selon l'une quelconque des revendications 4 ou 5,
**caractérisé en ce que**
si la mémoire est verrouillée, le régulateur (10) exécute une régulation de secours du générateur (11) et lorsque la mémoire (16) est libérée, il accède au contenu de la mémoire pour exécuter une régulation élargie du générateur (11).

7. Procédé de commande d'un régulateur de tension (10) comprenant une mémoire numérique selon l'une quelconque des revendications précédentes,
**caractérisé en ce que**
des données et/ou des programmes sont fournis à la mémoire numérique (16) pendant le fonctionnement.
